# EUROPEAN PATENT APPLICATION

(11) **EP 3 118 259 A1**
(43) Date of publication of application: **18.01.2017**
(21) Application number: 15761064.3
(22) Date of filing: 11.03.2015
(51) Int. Cl.: C08L 63/00, H01B 3/00, H01B 3/40

(54) **ELECTRICAL INSULATION MATERIAL AND MOLD ELECTRIC APPARATUS**

(30) Priority: 12.03.2014 JP 2014048601
(71) Applicant: Kabushiki Kaisha Toshiba, Minato-ku Tokyo 105-8001 (JP)
(72) Inventor: KOMIYA, Gen, Tokyo 105-8001 (JP); IMAI, Takahiro, Tokyo 105-8001 (JP); TAKEUCHI, Miwa, Tokyo 105-8001 (JP); MIYAUCHI, Yasuhisa, Tokyo 105-8001 (JP)
(74) Representative: Hoffmann Eitle
(86) International application number: PCT/JP2015/001346
(87) International publication number: WO 2015/136932

(57) **Abstract**

An electrical insulating material of an embodiment includes an epoxy resin 1, an inorganic particle filler containing magnesia 3 and silica 2 mixed in a weight ratio of 85:15 to 50:50, and a curing agent.

## Description

### FIELD

Embodiments described herein relate generally to an electrical insulating material and a molded electrical apparatus.

### BACKGROUND

Conventionally, for a molded electrical apparatus in which an electrical member such as a vacuum valve is molded from an epoxy resin, a plurality of members different in thermal expansion coefficient are embedded in an insulating layer, so that an electrical insulating material with improved crack resistance has been used. However, spherical silica being an inorganic particle filler that affects the crack resistance has been disadvantageous to the molded electrical apparatus that uses a large amount of resin in terms of cost when considering manufacturing processes.

In the meantime, magnesia (MgO) has been known as a relatively inexpensive inorganic particle filler. Magnesia is excellent in thermal conductivity and thus is used in large amounts for a sealing material of a semiconductor that requires heat resistance. However, the thermal expansion coefficient of magnesia is 13.1 ppm/K, which is extraordinarily large as compared to silica or the like, and therefore there has been a limit to an improvement in crack resistance.

For this reason, for the molded electrical apparatus, one capable of effectively bringing out the effect of silica and improving the crack resistance by suppressing a thermal expansion coefficient of an entire electrical insulating material with use of, as an inorganic particle filler, magnesia capable of achieving a reduction in cost by mass production has been desired. A recent molded electrical apparatus tends to be large in capacity and is affected by a large temperature rise, so that maintaining excellent thermal conductivity is also required.

### RELEVANT REFERENCES

### PATENT REFERENCE

Patent Reference 1: JP-A 2002-015621
Patent Reference 2: JP-A 2012-188629

### SUMMARY

### PROBLEMS TO BE SOLVED BY THE INVENTION

A problem to be solved by the embodiments is to provide an electrical insulating material and a molded electrical apparatus that have both excellent thermal conductivity and excellent crack resistance with use of magnesia as an inorganic particle filler.

### MEANS OF SOLVING THE PROBLEMS

An electrical insulating material of an embodiment includes an epoxy resin, an inorganic particle filler containing magnesia and silica mixed in a weight ratio of 85:15 to 50:50, and a curing agent.

### BRIEF DESCRIPTION OF THE DRAWINGS

Fig. 1 is a schematic view illustrating a heat radiation path of an electrical insulating material according to an embodiment.
Fig. 2 is a partial cross-sectional view illustrating structure of a molded bus molded from the electrical insulating material according to an embodiment.
Fig. 3 is a partial cross-sectional view illustrating structure of a molded vacuum valve molded from the electrical insulating material according to an embodiment.
Fig. 4 is a diagram illustrating components of electrical insulating materials according to Examples and Comparative examples.
Fig. 5 is a diagram illustrating measurement results of various properties of sample sheets molded from the electrical insulating materials according to Examples and Comparative examples.

### DETAILED DESCRIPTION

Hereinafter, there will be explained embodiments with reference to the drawings.

### (Electrical insulating material)

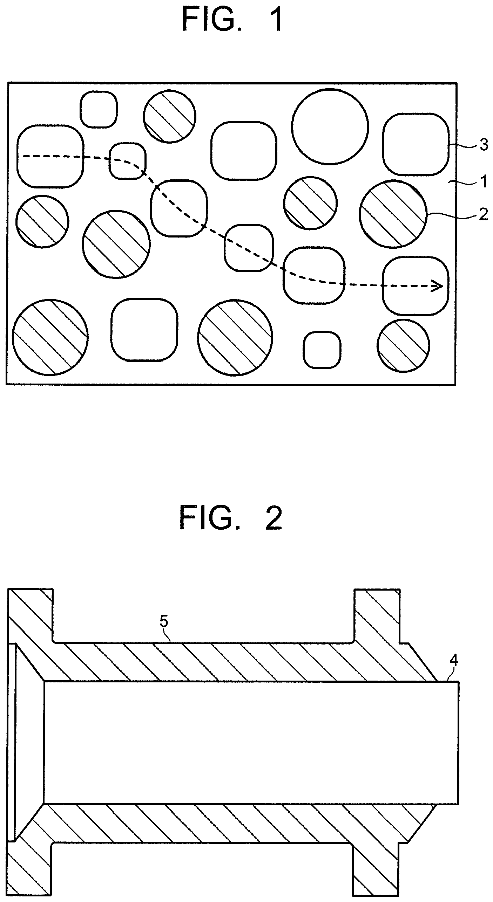

An electrical insulating material of an embodiment includes an epoxy resin, an inorganic particle filler containing magnesia and silica mixed in a weight ratio of 85:15 to 50:50, and a curing agent. FIG. 1 is a schematic view illustrating a heat radiation path of the electrical insulating material. An epoxy resin 1 contains a predetermined amount of silica 2 and magnesia 3 filled therein. It is considered that heat transfer is performed in a manner to transfer via the magnesia 3 adjacent to each other as indicated by the dotted line arrow. In order to maintain such a path, the electrical insulating material includes the inorganic particle filler containing the magnesia 3 and the silica 2 mixed in a weight ratio of 85:15 to 50:50. Further, the volume fraction of the inorganic particle filler containing the magnesia 3 and the silica 2 is preferably set to 45 to 51 Vol% with respect to the entire electrical insulating material. When the volume fraction of the inorganic particle filler exceeds 60 Vol% with respect to the entire electrical insulating material, the viscosity of the epoxy resin increases to be unsuitable for molding work. When a particle diameter of the magnesia 3 is smaller than a particle diameter of the silica 2, the magnesia 3 are dispersed and spreaded uniformly therein to improve heat transfer.

For these reasons, by mixing a predetermined amount of the silica 2 with the magnesia 3 that is used in large amounts in other fields and is industrially valuable in terms of cost by mass production, good thermal conductivity can be maintained while suppressing an increase in the thermal expansion coefficient. When an electrical member is molded from such an electrical insulating material, it is possible to exhibit excellent crack resistance and thermal conductivity.

### (Molded electrical apparatus)

FIG. 2 is a partial cross-sectional view illustrating structure of a molded bus including an insulating layer 5 using the electrical insulating material of the embodiment provided around a bar-shaped center conductor 4 made of aluminum. Both ends in the axial direction of the insulating layer 5 are a tapered interface connecting portion, respectively. A ground layer may be provided on the outer periphery of the insulating layer 5. The thermal expansion coefficient of aluminum is 23.0 ppm/K and is equal to the thermal expansion coefficient of the insulating layer 5 made of the electrical insulating material of the embodiment, so that it is possible to improve the crack resistance. Further, a heat radiation property from the insulating layer 5 improves, so that it is possible to achieve an increase in capacity. The thermal expansion coefficient of the electrical insulating material is preferable to be the same as or slightly larger than the thermal expansion coefficient of a material constituting the electrical member. For the center conductor 4, electrolytic copper having a thermal expansion coefficient smaller than that of aluminum can be used.

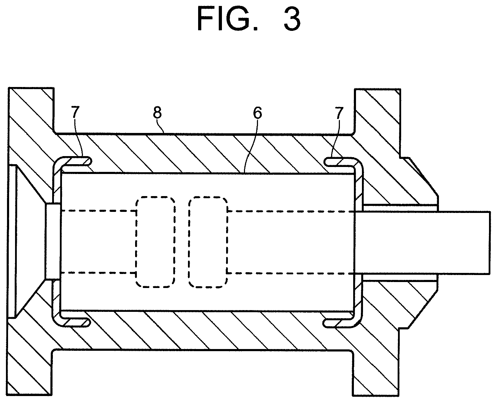

Next, FIG. 3 is a partial cross-sectional view illustrating structure of a molded vacuum valve that includes brass-made electric field relaxing rings 7 provided on a vacuum valve 6 having a pair of contacts capable of easily coming into contact with and separating from each other, and an insulating layer 8 using the electrical insulating material of the embodiment. Both ends in the axial direction of the insulating layer 8 are a tapered interface connecting portion, respectively. A ground layer may be provided on the outer periphery of the insulating layer 8. The thermal expansion coefficient of brass is 18.0 to 23.0 ppm/K and is equal to or smaller than the thermal expansion coefficient of the insulating layer 8 made of the electrical insulating material of the embodiment, so that it is possible to improve the crack resistance. Further, heat radiation from the contacts where heat is easily generated can be promoted. Various materials such as alumina porcelain and iron alloy can be used for the vacuum valve 6, by controlling thermal expansion coefficient, the crack resistance can be improved.

The center conductor 4 and the vacuum valve 6 are respectively an electrical member used in a power reception/distribution apparatus. The one obtained by embedding the electrical member in the insulating layer 5 or the insulating layer 8 becomes the molded electrical apparatus. The electrical member is coated with the insulating layers 5 or the insulating layer 8.

According to the electrical insulating material of the embodiment, since the inorganic particle filler containing a predetermined amount of the silica 2 mixed with the magnesia 3 is filled in the epoxy resin 1 as a thermosetting matrix resin, the electrical insulating material can maintain good thermal conductivity while suppressing an increase in the thermal expansion coefficient. Further, the molded electrical apparatus in which the electrical member is molded from the electrical insulating material contains a plurality of types of materials embedded therein, and the crack resistance and the heat radiation property of the molded electrical apparatus can be improved.

The embodiment has been explained using the inorganic particle filler containing the magnesia 3 and silica 2, but alumina, boron nitride, and/or the like can be further mixed in the inorganic particle filler. Further, when a particle with flexibility such as rubber particle is mixed in the inorganic particle filler, it is possible to improve toughness.

### [EXAMPLE]

Hereinafter, it will be explained in detail with reference to examples. Note that the embodiments are not limited by the examples.

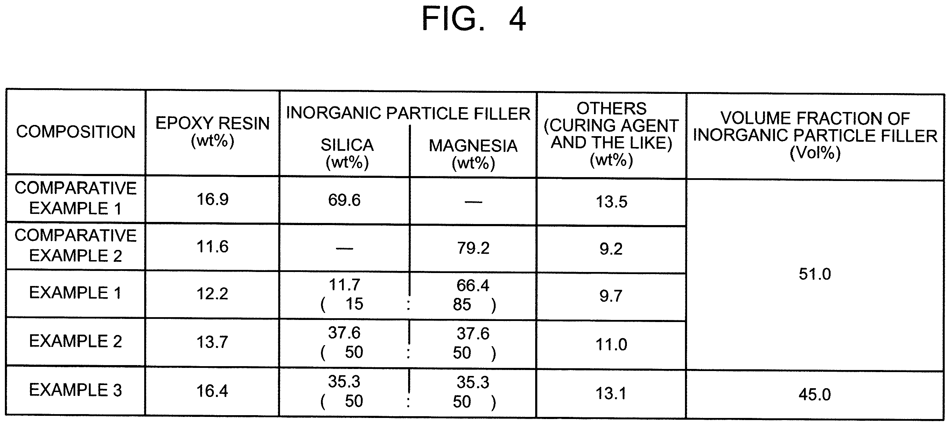

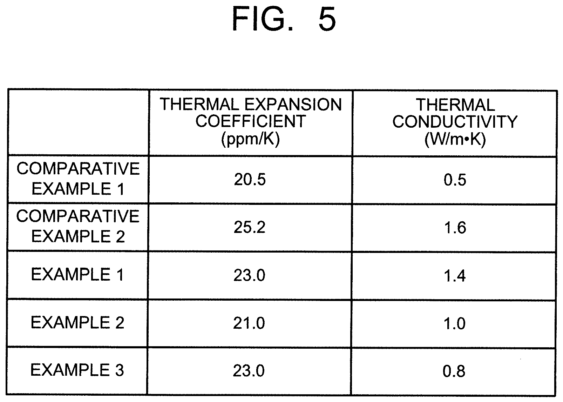

Components of electrical insulating materials and measurement results of a thermal expansion coefficient and thermal conductivity of sample sheets molded from the electrical insulating materials are explained with reference to FIG. 4 and FIG. 5. Molding was general casting, and the measurements of the thermal expansion coefficient and the thermal conductivity were in conformity to the relevant JIS Standards.

### (Comparative example 1)

Comparative example 1 was a conventional electrical insulating material using silica as an inorganic particle filler, and the thermal expansion coefficient was 20.5 ppm/K and the thermal conductivity was 0.5 W/m·K. The silica is spherical and a particle diameter thereof is 10 to 50 µm. The same is true of Comparative example and Examples below.

### (Comparative example 2)

Comparative example 2 was an electrical insulating material in which silica was all replaced with magnesia as an inorganic particle filler, and the thermal expansion coefficient was 25.2 ppm/K and the thermal conductivity was 1.6 W/m·K. The shape of magnesia particle is the degree to which their corners are rounded off, and a particle diameter of the magnesia is 10 to 50 µm similarly to the silica. The same is true of Examples below. As a result, the thermal conductivity was about three times that of Comparative example 1 to be good, but the thermal expansion coefficient increased significantly to be larger than the thermal expansion coefficient of the electrical member to be embedded in the above-described molded electrical apparatus.

### (Example 1)

In Example 1, as an inorganic particle filler, the magnesia and the silica were mixed in a weight ratio of 85:15 to be filled in an epoxy resin. The volume fraction of the inorganic particle filler is 51 Vol%. As a result, the thermal expansion coefficient was 23.0 ppm/K and the thermal conductivity was 1.4 W/m·K. The thermal expansion coefficient became equivalent to the thermal expansion coefficient of the electrical member to be embedded in the above-described molded electrical apparatus, and the thermal conductivity was about three times that of Comparative example 1.

### (Example 2)

In Example 2, the magnesia and the silica were mixed in a weight ratio of 50:50 to be filled in an epoxy resin. The volume fraction of the inorganic particle filler is 51 Vol%, which is the same as that of Example 1. As a result, the thermal expansion coefficient and the thermal conductivity were both good.

### (Example 3)

In Example 3, the magnesia and the silica were mixed in a weight ratio of 50:50 similarly to Example 2 to be filled in an epoxy resin. The volume fraction of the inorganic particle filler is 45 Vol%. As a result, the thermal expansion coefficient was 23.0 ppm/K and the thermal conductivity was 0.8 W/m·K. The thermal conductivity is about 1.6 times that of Comparative example 1.

While certain embodiments of the present invention have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An electrical insulating material, comprising:
an epoxy resin;
an inorganic particle filler containing magnesia and silica mixed in a weight ratio of 85:15 to 50:50; and
a curing agent.

2. The electrical insulating material of to claim 1,
wherein the inorganic particle filler is set to 45 to 51 Vol%.

3. The electrical insulating material of to claim 1 or 2,
wherein the magnesia has a particle diameter smaller than a particle diameter of the silica.

4. A molded electrical apparatus, comprising:
an electrical member used in a power reception/distribution apparatus; and
an insulating layer coating the electrical member, the insulating layer being made of an electrical insulating material including:
an epoxy resin;
an inorganic particle filler containing magnesia and silica mixed in a weight ratio of 85:15 to 50:50; and
a curing agent.

5. The molded electrical apparatus of to claim 4,
wherein the electrical member is a vacuum valve.

6. The molded electrical apparatus of to claim 4 or 5,
wherein the electrical member has a thermal expansion coefficient equal to or smaller than a thermal expansion coefficient of the electrical insulating material.
